(19) Europäisches Patentamt
European Patent Office
Office européen des brevets

(11) Numéro de publication: **0 171 311 B1**

(12) **FASCICULE DE BREVET EUROPEEN**

(45) Date de publication du fascicule du brevet: **26.10.88**

(51) Int. Cl.4: **H 01 M 4/62,** H 01 M 6/04

(21) Numéro de dépôt: **85401352.1**

(22) Date de dépôt: **03.07.85**

(54) **Procédé de stabilisation des générateurs électrochimiques primaires à anodes réactives en zinc, aluminium ou magnésium et anode pour un tel générateur stabilisée par ce procédé.**

(30) Priorité: **04.07.84 FR 8410632**

(43) Date de publication de la demande:
**12.02.86 Bulletin 86/7**

(45) Mention de la délivrance du brevet:
**26.10.88 Bulletin 88/43**

(84) Etats contractants désignés:
**AT BE CH DE GB IT LI NL SE**

(56) Documents cités:
**FR - A - 2 156 662**
**US - A - 4 040 916**
**US - A - 4 195 120**

**CHEMICAL ABSTRACTS, vol. 89, 1978, page 157, no. 149502k, Columbus, Ohio, US; & JP - A - 78 67 834 (FURUKAWA ELECTRIC CO., LTD.; FURUKAWA BATTERY CO., LTD.) 16-06-1978**

(73) Titulaire: **SOCIETE LES PILES WONDER, 7-9, rue Paul Vaillant Couturier, F-92300 Levallois-Perret (FR)**

(72) Inventeur: **Vignaud, René, 17, Avenue A. France, F-93600 Aulnay-Sous-Bois (FR)**

(74) Mandataire: **Weinmiller, Jürgen et al, Lennéstrasse 9 Postfach 24, D-8133 Feldafing (DE)**

**EP 0 171 311 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les générateurs électrochimiques primaires, ou piles électriques, comportant des anodes très réactives en zinc, aluminium ou magnésium, notamment du type bioxyde de manganèse/zinc, oxyde d'argent/zinc, oxyde de mercure/zinc, air/zinc, chlorure d'argent/magnésium et air/aluminium, avec un électrolyte alcalin ou salin, tel qu'une solution aqueuse de potasse ou de chlorure de zinc et de chlorure d'ammonium respectivement, solution dans laquelle l'anode est corrodable.

Si de tels piles permettent d'obtenir des énergies élevées, elles présentent, du fait de la corrodabilité de leurs anodes réactives dans l'électrolyte alcalin ou salin, une stabilité assez réduite avec

- perte de la capacité de la pile au cours du stockage résultant d'une solubilisation partielle de l'anode dans l'électrolyte,
- dégagement continu et important d'hydrogène gazeux provoquant l'éjection d'électrolyte et le gonflement ou même parfois l'éclactement de la pile,

l'importance de ces phénomènes nuisibles étant accrue en cas d'élévation de la température, par exemple en cas de stockage dans un pays chaud.

Pour pallier ces inconvénients et stabiliser une pile du type précité, notamment à électrolyte alcalin, on a proposé de la stabiliser soit en incorporant du mercure dans l'anode (avec formation d'un amalgame) dans le cas du zinc, soit d'ajouter certains composés organiques.

On a donc tout d'abord proposé d'incorporer un certain pourcentage de mercure, par exemple de 5 à 15% en poids par rapport au métal actif, dans le cas où celui-ci est constitué par du zinc, notamment pour une pile à électrolyte alcalin.

En effet le mercure présente la propriété d'accroître la surtension d'hydrogène du métal dans lequel il est incorporé (et ce d'autant plus que sa concentration y est importante) en inhibant la réaction de réduction du proton.

Malheureusement le mercure, et plus particulièrement ses composés sont toxiques. Ceci impose des mesures de sécurité strictes dans les processus de fabrication industrielle, et, par ailleurs, la dissémination des piles mises au rebut après usage constitue une cause de pollution dangereuse.

Il y a donc intérêt à éviter l'utilisation de mercure ou du moins à réduire la teneur en mercure des piles pour des raisons écologiques. D'ailleurs la réglementation tend à limiter progressivement cette teneur.

Mais une teneur en mercure par rapport au zinc dans l'anode inférieure à environ 3% en poids ne procure pas une stabilité suffisante aux piles à électrolyte alcalin.

On a par ailleurs proposé d'ajouter à une pile à anode de zinc, aluminium ou magnésium, pour la stabiliser, un certain nombre de composés organiques, tels que la diéthanolamine de l'acide oléïque, le monolauryléther, des amines, des composés ammonium quaternaires et certains polymères de l'oxyde d'éthylène, pour remplacer, en totalité ou en partie, le mercure.

De tels composés n'assurent malheureusement pas une stabilité suffisante et sont eux-mêmes souvent d'emploi difficile ou d'efficacité réduite.

La demanderesse a maintenant découvert qu'il était possible de stabiliser une anode réactive en zinc, aluminium ou magnésium d'un générateur électrochimique primaire, à électrolyte alcalin ou salin, en incorporant à l'anode une très faible quantité (en général inférieur à 1%) d'un composé organique d'un type particulier représenté par les formules (1) et (2) indiquées dans la revendication 1, l'anode, lorsqu'elle est en zinc, étant de préférence additionnée d'une faible teneur de mercure, de l'ordre de 0,2% à 2%, notamment dans le cas des piles à électrolyte alcalin.

S'il est bien exact que l'on a proposé d'incorporer de tels composés dans des générateurs électrochimiques (demande de brevet japonais publiée no 78/67.834 du 16 juin 1978 référencée dans Energy Technology, vol. 89, 1978, no 149.502), cette incorporation concernait exclusivement les générateurs secondaires (accumulateurs) et avait un but différent, à savoir d'accroître la durée de vie de tels générateurs secondaires en améliorant les cycles charge/décharge par réduction de la précipitation du zinc des anodes pendant la charge.

L'invention a donc pour objet un procédé de stabilisation d'un générateur électrochimique primaire comportant au moins une anode réactive en un métal pris dans le groupe du zinc, de l'aluminium et du magnésium, caractérisé en ce qu'on ajoute à ladite électrode un pourcentage de 0,01% à 1% en poids par rapport au métal d'au moins un composé organique choisi parmi les composés répondant à la formule

$$C_nF_{2n+1}-(CH_2)_p-(CH_2CH_2O)_q-OH \qquad (1)$$

et les composés répondant à la formule

$$C_nF_{2n-1}-(CH_2)_p-(CH_2CH_2O)_q-OH \qquad (2)$$

dans lesquelles:

n est compris entre 4 et 20, de préférence entre 6 et 8;

p est compris entre 1 et 10 et est de préférence voisin de 2; et

q est compris entre 3 et 40, de préférence entre 10 et 12.

En ce qui concerne des mises en œuvre préférées de l'invention, référence est faite aux revendications 2 à 6. L'invention a également pour objet une anode obtenue par ce procédé ainsi qu'un générateur électrochimique comportant une telle anode.

Grâce à l'invention, on réduit la corrosion du métal de l'anode et on évite les diminutions de capacité de la pile au cours du stockage, le dégagement d'hydrogène, les fuites d'électrolyte et le gonflement de la pile, sans avoir recours à une

addition de mercure ou, pour le moins, pour une électrode en zinc, avec une addition de mercure en une teneur réduite répondant aux normes et aux exigences écologiques.

L'invention pourra, de toute façon, être bien comprise à l'aide du complément de description qui suit, lequel complément est, bien entendu, donné surtout à titre d'indication.

A. Electrode de zinc pour pile, dite «alcaline», à électrolyte alcalin.

On prépare un mélange anodique, destiné à constituer l'électrode négative, ou anode, d'une pile, en introduisant successivement, dans un mélangeur, de la poudre de zinc amalgamée à 1%, de la solution de potasse à 40%, un agent gélifiant, tel que la carboxyméthylcellulose et l'inhibiteur selon l'invention, à savoir dans la proportion de 500 ml de solution de potasse et 50 g de carboxyméthylcellulose par kilo de zinc amalgamé.

L'inhibiteur peut être réparti à la surface du zinc amalgamé en mettant en œuvre un solvant non aqueux (tel que l'alcool éthylique ou l'acétone) que l'on évapore ensuite, ou en mélangeant l'inhibiteur à la solution de potasse.

La masse anodique ainsi obtenue est testée dans une solution de potasse 10 N à 45°C et on mesure la vitesse de corrosion en µl/g/jour (microlitre d'hydrogène CTPN par gramme de zinc et par jour). Une vitesse supérieure à 10 µl/g/jour est inacceptable dans un générateur électrochimique. On sait en effet que la vitesse de corrosion (déterminée par le volume d'hydrogène dégagé par gramme d'échantillon et par jour, lorsque cet échantillon est immergé dans l'électrolyte en question) est largement utilisé pour le contrôle des échantillons amalgamés et montre une très bonne corrélation avec la conservation effective des générateurs électrochimiques. Pour accélérer le test on opère généralement à 45°C.

A titre de comparaison, une poudre de zinc non amalgamée a une vitesse de corrosion très nettement supérieure à 10 µl/g/jour (de l'ordre de 2000 µl/g/jour); amalgamée à 0,2% elle a une vitesse de corrosion de l'ordre de 2000 µl/g/jour, à 1% une vitesse de corrosion de l'ordre de 20 µl/g/jour, donc encore supérieure à 10 µl/g/jour; amalgamée à 5% une vitesse de corrosion de 1,5 µl/g/jour environ, cette dernière étant acceptable dans la plupart des générateurs.

Exemple 1

L'inhibiteur est constitué par le composé organique perfluoré de formule:

$$C_6F_{13}C_2H_4(C_2H_4O)_qOH \qquad (3)$$

dans laquelle q est voisin de 12.

Cette formule correspond sensiblement au produit commercial FORAFAC 1110 de la Société Atochem.

La teneur en inhibiteur utilisé est de 0,01% en poids par rapport au zinc.

On effectue une mesure de la vitesse de corrosion et on a trouvé 0,7 µl/g/jour.

Exemples 2 et 3

On a répété l'exemple 1, mais avec une électrode de zinc amalgamé à 0,2% et de zinc non amalgamé.

Le tableau ci-après résume la comparaison de mesures de vitesses de corrosion, sans inhibiteur, selon l'invention, et avec l'inhibiteur de formule (3) à 0,1%, avec les électrodes de zinc ayant différents taux d'amalgamation et une électrode de zinc non amalgamée.

| Taux d'amalgamation % en poids de Hg par rapport au zinc | Vitesse de corrosion sans inhibiteur de formule (3) | µl/g/jour avec inhibiteur de formule (3) |
|---|---|---|
| 5% | 1,5 | - |
| 1% | 20 | 0,7 |
| 0,2% | 200 | 5 |
| 0 | 2000 | 20 |

Exemple 4

On répète l'exemple 1 en remplaçant le composé (3) par le mélange suivant:

$$C_6F_{13}C_2H_4(C_2H_4O)_{14}OH$$
et (4)
$$C_{10}F_{21}C_2H_4(C_2H_4O)_{14}OH$$

avec une masse moléculaire moyenne correspondant au composé

$$C_7F_{15}C_2H_4(C_2H_4O)_{14}OH$$

La vitesse de corrosion, mesurée selon la méthode définie précédemment, est de 0,8 µl/g/jour pour une teneur de 0,01% du mélange (4) précité.

Exemple 5

On répète l'exemple 1, mais en utilisant à la place du composé (3), 0,01% du composé perfluoré non saturé:

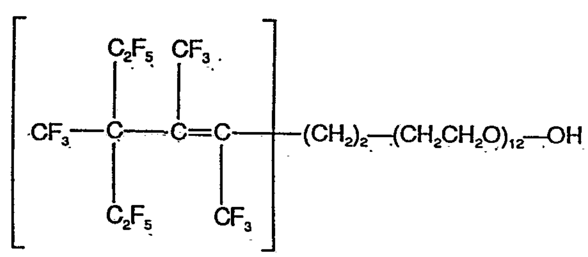

La vitesse de corrosion mesurée selon la méthode décrite précédemment est de 1,9 µl/g/jour.

Exemple d'application industrielle dans un générateur alcalin à électrode de zinc.

Des générateurs primaires, tels que décrits dans le brevet français no 2 503 935 de la demanderesse, ont été montés en deux séries:

- l'une comportant une masse anodique composée de poudre de zinc amalgamé à 5%, un électrolyte constitué par une solution de potasse à 40% et un agent gélifiant (carboxyméthylcellulose), les proportions étant de 300 ml de solution de potasse et 25 g de carboxyméthylcellulose par kilo de zinc amalgamé;
- l'autre comportant, dans le même électrolyte et le même agent gélifiant, une masse anodique dont la poudre de zinc n'est amalgamée qu'à 1%, mais dans laquelle, au cours du mélange avec l'électrolyte et le même gélifiant, on a introduit le FORAFAX 1110 précité dans la proportion de 0,1% en poids par rapport au zinc.

Les deux séries ont été stockées pendant trois mois à 45°C. Au terme de cette période de stockage l'observation n'a montré aucune exsudation d'électrolyte à l'extérieur des piles due à une éventuelle surpression. Le démontage des piles a permis de constater qu'il n'y a aucune expansion du gel anodique.

Enfin les éléments de ces deux séries, en module R 20, déchargés sur 3,9 ohms en régime continu, présentent la même dispersion dans la durée de décharge 59 h ± 1 h, c'est-à-dire qu'il n'y a aucune perte de capacité des piles de la seconde série par rapport à celles de la première.

B. Electrode de zinc pour piles dites «salines» à électrolyte salin.

Il est bien connu que les piles du type bioxyde de manganèse/zinc, dites «piles salines», utilisent un électrolyte composé d'une solution aqueuse de chlorure de zinc et de chlorure d'ammonium, dans laquelle l'électrode de zinc a tendance à se corroder pour former de l'hydrogène, ce qui a pour conséquence de provoquer des fuites d'électrolyte, par perforation du godet de zinc, et des pertes de capacité en stockage.

L'électrode de zinc de ces piles est constituée de métal en feuille, donc moins réactif que la poudre divisée des générateurs alcalins. Cette feuille de zinc n'est amalgamée qu'en surface, le poids de mercure par pile est par suite 1000 fois plus faible que celui qui est nécessaire pour les piles dites «alcalines» à électrolyte alcalin.

L'effet inhibiteur des composés selon l'invention est mis en évidence par le test de corrosion effectué à 45°C dans une solution saline comprenant 25% en poids de $Cl_2$ $Z_n$, 25% en poids de $NH_4Cl$ et le complément en eau.

L'utilisation d'éprouvettes de zinc en poudre présente l'avantage d'apporter une réponse rapide et statistiquement plus homogène. En effet, les languettes taillées dans un godet de pile présentent une grande hétérogénéité de structure due aux lignes de filage du tube, et par suite une grande dispersion dans les réponses à l'essai de corrosion.

Le rapport des surfaces actives et par suite des vitesses de corrosion entre la poudre et la feuille est voisin de 5000.

On a obtenu les vitesses de corrosion suivantes:

| | |
|---|---|
| électrode témoin sans mercure et sans inhibiteur selon l'invention | 2000 µl/g/jour |
| électrode avec 0,01% en poids du composé (3) précité | 340 µl/g/jour |
| électrode avec 5% en poids de mercure | 175 µl/g/jour |

L'effet inhibiteur du composé perfluoré du type fluoroalcool éthoxy é est très net, même en milieu salin.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Procédé de stabilisation d'un générateur électrochimique primaire comportant au moins une anode réactive en un métal pris dans le groupe du zinc, de l'aluminium et du magnésium, caractérisé en ce qu'on ajoute à ladite électrode un pourcentage de 0,01% à 1% en poids par rapport au métal d'au moins un composé organique choisi parmi les composés répondant à la formule

$$C_nF_{2n+1}-(CH_2)_p-(CH_2CH_2O)_q-OH \quad (1)$$

et les composés répondant à la formule

$$C_nF_{2n-1}-(CH_2)_p-(CH_2CH_2O)_q-OH \quad (2)$$

dans lesquelles:
n est compris entre 4 et 20, de préférence entre 6 et 8;
p est compris entre 1 et 10 et est de préférence voisin de 2; et
q est compris entre 3 et 40, de préférence entre 10 et 12.

2. Procédé de stabilisation selon la revendication 1, caractérisé en ce que l'anode, étant en zinc, comporte du mercure en une quantité inférieure à 2% en poids par rapport au zinc, notamment lorsqu'elle est destinée à un générateur à électrolyte alcalin.

3. Procédé de stabilisation selon la revendication 1, caractérisé en ce que ledit composé organique a la formule:

$$C_6F_{13}C_2H_4(C_2H_4O)_qOH \quad (3)$$

4. Procédé de stabilisation selon la revendication 1, caractérisé en ce que l'on met en œuvre un mélange de deux ou plusieurs composés selon la formule (1).

5. Procédé de stabilisation selon la revendication 4, caractérisé en ce que ledit composé organique est constitué par le mélange des deux composés suivants:

$$C_6F_{13}C_2H_4(C_2H_4O)_{14}OH$$
et (4)
$$C_{10}F_{21}C_2H_4(C_2H_4O)_{14}OH$$

avec une masse moléculaire moyenne correspondant au composé:

$$C_7F_{15}C_2H_4(C_2H_4O)_{14}OH.$$

6. Procédé de stabilisation selon la revendication 1, caractérisé en ce que ledit composé répond à la formule:

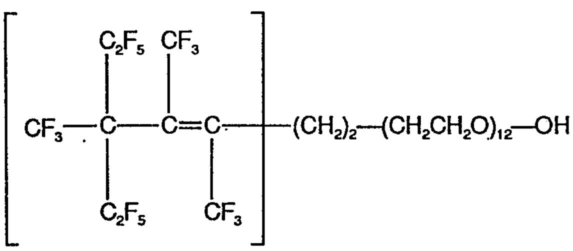

7. Anode pour générateur électrochimique primaire, obtenue par le procédé selon l'une quelconque des revendications précédentes.

8. Générateur électrochimique primaire à électrolyte alcalin, caractérisé en ce qu'il comporte une anode selon la revendication 7.

9. Générateur électrochimique primaire à électrolyte salin, caractérisé en ce qu'il comporte une anode selon la revendication 7.

## Claims

1. A process for stabilizing a primary electrochemical generator comprising at least one reactive anode made from a metal taken from the group comprising zinc, aluminium and magnesium, characterized in that there is added a percentage of 0.01% to 1%, by weight with respect to the metal, of at least one organic compound taken from the compounds corresponding to the formula:

$$C_nF_{2n+1}-(CH_2)_p-(CH_2CH_2O)_q-OH \quad (1)$$

and to the formula:

$$C_nF_{2n-1}-(CH_2)_p-(CH_2CH_2O)_q-OH \quad (2)$$

in which:
n is between 4 and 20, preferably between 6 and 8;
p is between 1 and 10 and is preferably close to 2; and
q is between 3 and 40, preferably between 10 and 12.

2. A stabilization process according to claim 1, characterized in that the anode, which is made from zinc, comprises mercury in an amount less than 2% by weight with respect to the zinc, more especially when it is intended for an alkaline electrolyte generator.

3. A stabilization process according to claim 1, characterized in that the organic compound has the formula:

$$C_6F_{13}C_2H_4(C_2H_4O)_qOH \quad (3)$$

4. A stabilization process according to claim 1, characterized in that a mixture of two or more compounds according to the formula (1) is used.

5. A stabilization process according to claim 4, characterized in that the organic compound is formed by the mixture of the two following compounds:

$$C_6F_{13}C_2H_4(C_2H_4O)_{14}OH$$
and
$$C_{10}F_{21}C_2H_4(C_2H_4O)_{14}OH$$

with a mean molecular mass corresponding to the compound:

$$C_7F_{15}C_2H_4(C_2H_4O)_{14}OH.$$

6. A stabilization process according to claim 1, characterized in that the compound corresponds to the formula:

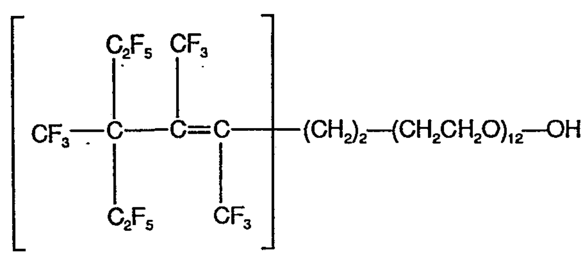

7. An anode for a primary electrochemical generator obtained by the process according to any one of the preceding claims.

8. A primary electrochemical generator with alkaline electrolyte, characterized in that it comprises an anode according to claim 7.

9. A primary electrochemical generator with saline electrolyte, characterized in that it comprises an anode according to claim 7.

## Patentansprüche

1. Verfahren zur Stabilisierung eines primären elektrochemischen Generators mit mindestens einer reaktiven Anode aus einem Metall der von Zink, Aluminium und Magnesium gebildeten Gruppe, dadurch gekennzeichnet, dass der Elektrode zwischen 0,01 und 1 Gewichtsprozent, bezogen auf das Metall, mindestens einer organischen Verbindung beigegeben wird, welche aus Verbindungen gemäss der Formel

$$C_nF_{2n+1}-(CH_2)_p-(CH_2CH_2O)_qOH \quad (1)$$

und den Verbindungen gemäss der Formel

$$C_nF_{2n-1}-(CH_2)_p-(CH_2CH_2O)_q-OH \quad (2)$$

gewählt wird, wobei
n zwischen 4 und 20, vorzugsweise zwischen 6 und 8
p zwischen 1 und 10, vorzugsweise nahe bei 2 und
q zwischen 3 und 40, vorzugsweise zwischen 10 und 12 liegt.

2. Stabilisierungsverfahren nach Anspruch 1, dadurch gekennzeichnet, dass die Zinkanode weniger als 2 Gewichtsprozent Quecksilber bezogen auf das Zink enthält, insbesondere wenn sie für einen Generator mit alkalischem Elektrolyten bestimmt ist.

3. Stabilisierungsverfahren nach Anspruch 1, dadurch gekennzeichnet, dass die organische Verbindung die Formel

$$C_6F_{13}C_2H_4(C_2H_4O)_qOH \quad (3)$$

besitzt.

4. Stabilisierungsverfahren nach Anspruch 1, dadurch gekennzeichnet, dass ein Gemisch von zwei oder mehr Verbindungen gemäss Formel (1) verwendet wird.

5. Stabilisierungsverfahren nach Anspruch 4, dadurch gekennzeichnet, dass die organische Verbindung aus einem Gemisch der folgenden beiden Verbindungen besteht:

$C_6F_{13}C_2H_4(C_2H_4O)_{14}OH$
und (4)
$C_{10}F_{21}C_2H_4(C_2H_4O)_{14}OH$,

mit einer mittleren molaren Masse entsprechend der Verbindung

$C_7F_{15}C_2H_4(C_2H_4O)_{14}OH$.

6. Stabilisierungsverfahren nach Anspruch 1, dadurch gekennzeichnet, dass die Verbindung der folgenden Formel genügt:

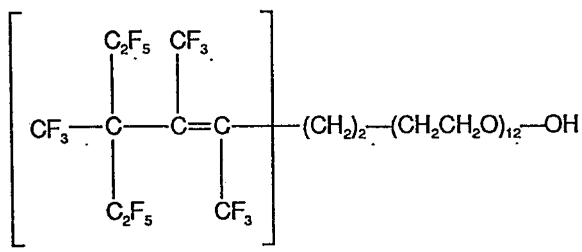

7. Anode für primäre elektrochemische Generatoren, hergestellt gemäss dem Verfahren nach einem der vorhergehenden Ansprüche.

8. Primärer elektrochemischer Generator mit alkalischem Elektrolyten, dadurch gekennzeichnet, dass er eine Anode nach Anspruch 7 aufweist.

9. Primärer elektrochemischer Generator mit saurem Elektrolyten, dadurch gekennzeichnet, dass er eine Anode nach Anspruch 7 aufweist.